# EUROPÄISCHE PATENTSCHRIFT

(11) **EP 3 911 944 B1**
(45) Veröffentlichungstag und Bekanntmachung des Hinweises auf die Patenterteilung: **22.02.2023**
(21) Anmeldenummer: 20702736.8
(22) Anmeldetag: 14.01.2020
(51) Int. Cl.: G01N 21/954, G06T 7/00

(54) **VERFAHREN UND VORRICHTUNG ZUR BOROSKOPINSPEKTION**
BORESCOPE INSPECTION METHOD AND DEVICE
PROCÉDÉ ET DISPOSITIF D'INSPECTION AU BOROSCOPE

(30) Priorität: 14.01.2019 DE 102019100822
(43) Veröffentlichungstag der Anmeldung: 24.11.2021
(73) Patentinhaber: Lufthansa Technik AG, 22335 Hamburg (DE)
(72) Erfinder: PETERS, Jan Oke, 22339 Hamburg (DE); THIES, Michael, 22395 Hamburg (DE); RASCHE, Sven, 20459 Hamburg (DE); DOMASCHKE, Tomas, 20357 Hamburg (DE); SCHÜPPSTUHL, Thorsten, 21073 Hamburg (DE); NEDDERMEYER, Werner, 6496 Echternach (LU); BAHR, Sönke, 64285 Darmstadt (DE)
(74) Vertreter: Glawe, Delfs, Moll
(86) Internationale Anmeldenummer: PCT/EP2020/000009
(87) Internationale Veröffentlichungsnummer: WO 2020/148085

(56) Entgegenhaltungen:
- EP-A1- 3 264 341
- US-A1- 2007 132 840
- US-A1- 2015 146 964
- US-A1- 2015 346 115

## Beschreibung

Die Erfindung betrifft ein Verfahren sowie eine Vorrichtung zur Boroskopinspektion von Bauteilen, insbesondere von Turbinen- und/oder Kompressorschaufeln in einer Gasturbine, wie bspw. einem Flugzeugtriebwerk.

Im Stand der Technik sind diverse Verfahren zur optischen Inspektion von Gasturbinen, insbesondere von Flugzeugtriebwerken wie Strahltriebwerken, bekannt, bei denen ein Boroskop durch eine seitliche Öffnung in eine vollständig montierte Gasturbine eingeführt wird, um so dann das Innere der Gasturbine optisch inspizieren zu können.

Aufgrund der im Betrieb auftretenden Belastungen wird eine entsprechende Boroskopie insbesondere für die Inspektion von Turbinen- und Kompressorschaufeln von Flugzeugtriebwerken verwendet. Dazu wird ein Boroskop seitlich in das Flugzeugtriebwerk eingeführt und so im Innern des Gaskanals positioniert, dass eine Schaufel einer Turbinen- oder Kompressorstufe sowie der Anschlussbereich der Triebwerksschaufel - bei größeren Triebwerkschaufeln ein vorgegebener Höhenbereich der Schaufeloberfläche - vollständig im Bildbereich des Boroskop liegt. Die Turbinen- oder Kompressorstufe wird dann rotiert, womit sämtliche Triebwerkschaufeln der entsprechenden Stufe dynamisch vom Boroskop erfasst werden können.

Die dabei erzeugten Bild- bzw. Videoaufnahmen werden manuell analysiert, um den Bauzustand der Triebwerkschaufeln zu dokumentieren. Aus dem Dokument US 2007/0132840 A1 ist auch ein Verfahren zur automatischen Dokumentation von Beschädigungen von Triebwerksschaufeln einer Turbinenstufe anhand endoskopisch erstellter stereoskopischer Bildaufnahmen bekannt.

Bei signifikanten Beschädigungen kann eine manuelle statische 3D-Erfassung einer einzelnen Triebwerkschaufel erfolgen, um die Beschädigungen genauer analysieren zu können. Das Dokument US 2015/0346115 A1 offenbart ein für eine solche 3D-Erfassung grundsätzlich geeignetes Boroskop, welches für eine ausreichend genaue Erfassung jedoch präzise entlang einer geradlinigen Achse geführt werden muss. Das Dokument US 2015/0146964 A1 schlägt vor, das aus einer 3D-Erfassung resultierende 3D-Modell zu colorieren. Die 3D-Erfassung mit dieser oder vergleichbaren bekannten Vorrichtungen ist jedoch sehr aufwendig und zeitintensiv, sodass sie nur in Ausnahmefällen durchgeführt wird.

Das Dokument EP 3 264 341 A1 schlägt vor, die 3D-Erfassung einer Triebwerksschaufel zu nutzen, um durch Abgleich mit einem CAD-Modell der Triebwerkschaufel in ihrer ursprünglichen Form mögliche Beschädigungen zu identifizieren. Für die dortige 3D-Erfassung muss die Triebwerksschaufel jedoch aufwendig aus dem Triebwerk ausgebaut werden.

Der Erfindung liegt die Aufgabe zugrunde, ein Verfahren zur Boroskopinspektion eines Bauteils sowie eine dafür ausgebildete Vorrichtung zu schaffen, welche eine verbesserte 3D-Erfassung von Oberflächen im Innern eines Bauteils, insbesondere eines Flugzeugtriebwerks, und eine automatisierte Schadensermittlung aufweisen.

Gelöst wird diese Aufgabe durch ein Verfahren gemäß dem Hauptanspruch sowie eine Vorrichtung gemäß dem Anspruch 9. Vorteilhafte Weiterbildungen sind Gegenstand der abhängigen Ansprüche.

Demnach betrifft die Erfindung ein Verfahren zur Boroskopinspektion eines Bauteils, bei dem ein Stereoboroskop zur Aufnahme des Bauteils verwendet wird, gekennzeichnet durch die Schritte:
- Erzeugen zweier stereoskopischer Teilbilder durch das Stereoboroskop;
- Berechnung von 3D-Triangulationsdaten aus den stereoskopischen Teilbildern;
- Registrieren der 3D-Triangulationdaten auf ein 3D-CAD-Referenzmodell des vom Stereoboroskop erfassten Bauteils unter Ermittlung eines Projektionspunktes;
- Projektion von aus den stereoskopischen Teilbildern ermittelten 2D-Bilddaten auf das Referenzmodell vom ermittelten Projektionspunkt; und
- Ermitteln von Schäden durch Bildanalyse der projizierten 2D-Bilddaten und durch Feststellung von Abweichungen der registrierten 3D-Triagulationsdaten gegenüber dem Referenzmodell.

Weiterhin betrifft die Erfindung eine Vorrichtung zur Boroskopinspektion eines Bauteils umfassend ein Stereoboroskop und eine damit verbundene Rechnereinheit mit Zugriff auf einem Speicher umfassend ein 3D-CAD-Referenzmodell des zu inspizierenden Bauteils, wobei die Vorrichtung zur Durchführung des erfindungsgemäßen Verfahrens ausgebildet ist.

Zunächst werden einige in Zusammenhang mit der Erfindung verwendete Begriffe erläutert.

Bei einem "Stereoboroskop" handelt es sich um ein Boroskop, welches zur stereoskopischen Aufnahme ausgebildet ist. Dazu weist das Stereoboroskop zwei voneinander beabstandete Bilderfassungseinheiten auf, deren Aufnahmekegel in einer Aufnahmeebene überlappen, sodass sich in der Aufnahmeebene ein gemeinsamer Aufnahmebereich ergibt, der von beiden Aufnahmekegeln erfasst wird. Das Ergebnis der beiden Bilderfassungseinheiten sind zunächst "2D-Bilddaten", also eine rasterförmige Anordnung von Bildpunkten, die entweder Farbinformationen oder Helligkeitsinformationen (Graustufen) aufweisen. Aufgrund des Abstandes der beiden Bilderfassungseinheiten und dem daraus resultierenden abweichenden Sichtwinkel auf den Aufnahmebereich können für praktisch jeden Punkt im Aufnahmebereich mithilfe von Triangulation der Abstand von den Bilderfassungseinheiten als "3D-Triangulationsdaten" ermittelt werden. Dazu geeignete Verfahren sind unter dem Begriff Stereovision bekannt. Aus den Bildinformationen kann zusammen mit den 3D-Triangulationsdaten ein 3D-Modell des von dem Boroskop aufgenommenen Gegenstands bzw. Bildbereichs erzeugt werden.

Das Stereoboroskop kann auf dem Prinzip des "Videoskops" basieren, bei dem die von einer Optik am freien Ende des Boroskop aufgenommenen Bilder nicht über eine optische Leitung zu einem Okular oder einer Kamera am anderen Ende des Boroskops geleitet werden, sondern mit Hilfe von geeigneten Halbleiterelementen als Bilderfassungseinheiten unmittelbar am freien Ende in elektronische Bildinformationen gewandelt werden, die dann über eine Datenverbindung bspw. an eine Anzeige oder an eine Rechnereinheit zur weiteren Verarbeitung übermittelt werden. Entsprechende Halbleiterelemente, wie optische CCD- oder CMOS-Sensoren, sind im Stand der Technik bekannt. Unmittelbar im Bereich der optischen Halbleiterelemente können noch weitere integrierte Schaltkreise vorgesehen sein, die eine Vorverarbeitung der von den Halbleiterelementen erfassten elektronischen Bildinformationen durchführen können, um bspw. durch Datenreduktion die über die Datenverbindung zu übertragene Datenmenge zu reduzieren. Eine Datenreduktion kann durch Kompression der von den Halbleiterelementen stammenden elektronischen Bildinformationen erreicht werden. Es ist zusätzlich oder alternativ auch möglich, dass der integrierte Schaltkreis, bspw. ein "Field Programmable Gate Array" (FPGA), aus den elektronischen Bildinformationen diejenigen Daten entfernt, die nicht den letztendlichen, von beiden Halbleiterelementen erfassten gemeinsamen Aufnahmebereich abbilden. Auch können die nachfolgend beschriebenen Berechnungen, wie bspw. die Ermittlung von 3D-Triangulationsdaten oder Erzeugung von 2D-Bilddaten wenigstens teilweise durch einen entsprechenden integrierten Schaltkreis durchgeführt werden. Andere Teilschritte, wie bspw. das Registrieren der 3D-Triangulationsdaten auf ein 3D-CAD-Modell werden bevorzugt durch eine externe Rechnereinheit, wie bspw. einen Computer, durchgeführt, der die dafür erforderlichen Daten über die Datenverbindung vom Stereoboroskop erhält.

In einem ersten Schritt werden durch das Stereoboroskop zwei stereoskopische Teilbilder erzeugt, indem die Bilderfassungseinheiten gleichzeitig ein Bild des gemeinsamen Aufnahmebereichs bzw. des aufzunehmenden Bauteils oder eines Teils davon erfassen. Die gleichzeitige Erfassung ist vorteilhaft um eventuelle zeitliche Veränderungen zwischen zwei sequentiellen Aufnahmen unmittelbar ausschließen zu können, bspw. weil das aufzunehmende Bauteil bewegt wird. Handelt es sich bei den Bilderfassungseinheiten um Halbleiterelemente ist bevorzugt, wenn diese mit Global Shutter ausgestattet sind, um das Risiko von Bewegungsartefakten zu minimieren.

Sofern erforderlich können die von den beiden Bilderfassungseinheiten erfassten stereoskopischen Teilbilder anhand einer vorgegebenen Kalibrierung rektifiziert werden, um evtl. Verzerrungen auszugleichen und/oder einen Farbabgleich durchzuführen. Ein entsprechendes Rektifizieren kann die nachfolgenden Berechnungen vereinfachen und/oder die Genauigkeit der Berechnungsergebnisse erhöhen.

Aus den beiden, ggf. rektifizierten stereoskopischen Teilbildern werden dann 3D-Triangulationsdaten erzeugt. Die dafür erforderlichen Stereovisionsberechnungen und -verfahren sind im Stand der Technik weithin bekannt und benötigen an dieser Stelle keine weiteren Erläuterungen. Im Ergebnis liegen nach der Berechnung zu einer Vielzahl von Punkten im Aufnahmebereich Informationen zu deren Abstand zu den Bilderfassungseinheiten vor.

Anschließend werden die 3D-Triangulationsdaten auf ein 3D-CAD-Referenzmodell des vom Stereoboroskop erfassten Bauteils registriert. Dazu wird in einem automatisierten Verfahren auf Basis der 3D-Triangulationsdaten ein Projektionspunkt gegenüber dem 3D-CAD-Referenzmodell ermittelt, von dem aus die 3D-Triangulationsdaten am besten mit dem 3D-CAD-Referenzmodell übereinstimmen. In dem der Projektionspunkt unmittelbar aus den 3D-Triangulationsdaten gewonnen wird, können evtl. Ungenauigkeiten bei der Bestimmung der Lage des Projektionspunktes über eine anderswie ermittelte Position des Stereoboroskops bzw. dessen Bilderfassungseinheiten ausgeschlossen werden. Es ist jedoch regelmäßig vorteilhaft, wenn die automatisierte Ermittlung des Projektionspunktes beginnend mit einer bspw. über eine Boroskopführungsvorrichtung ermittelbare Position des Stereoboroskop erfolgt. Auch wenn diese ermittelbare Position aufgrund von Messungenauigkeiten o.Ä. nicht exakt mit dem letztendlichen Projektionspunkt sein mag, so liegt sie im Regelfall dennoch in der Nähe des gesuchten Projektionspunktes. In der Folge kann der gewünschte Projektionspunkt ausgehend von der ermittelbare Position des Stereoboroskop häufig schneller ermittelt werden, als bei einem arbiträren Startpunkt zur Ermittlung des Projektionspunktes. Auch kann durch die Vorgabe der ermittelbaren Position des Stereoboroskop als Startpunkt im Falle, dass grundsätzlich mehrere Projektionspunkte in Frage kommen, zur Eindeutigkeit der Ermittlung des Projektionspunktes beitragen. Die ermittelbare Position umfasst regelmäßig auch die Orientierung der Bilderfassungseinheiten des Stereoboroskops.

Die Ermittlung des Projektionspunktes kann bspw. erfolgen, indem die Abweichungen zwischen 3D-Triangulationsdaten und 3D-CAD-Referenzmodell minimiert werden, in dem der Projektionspunkt schrittweise verändert wird, bis sich ein gewünschtes Minimum der Abweichungen der einzelnen Punkte der 3D-Triangulationsdaten vom 3D-CAD-Referenzmodell einstellt und/oder die Standardabweichung dieser Abweichungen minimal ist.

Ist der Projektionspunkt ermittelt, ist es möglich, dass anschließend das 3D-CAD-Referenzmodell entsprechend der 3D-Triangulationsdaten angepasst wird. In anderen Worten sollen Abweichungen, die sich zwischen den 3D-Triangulationsdaten und dem 3D-CAD-Referenzmodell ergeben, bspw. weil sich aus den 3D-Triangulationsdaten eine Verformung des aufgenommenen Bauteils ergibt, in das 3D-CAD-Referenzmodell übernommen werden, damit dieses dann ein möglichst genaues Abbild des Bauteils bietet.

Unabhängig davon, ob das 3D-CAD-Referenzmodell entsprechend der 3D-Triangulationsdaten angepasst wird oder nicht, werden anschließend die 2D-Bilddaten ausgehend von dem Projektionspunkt auf das Referenzmodell projiziert, um das 3D-CAD-Referenzmodell so zu texturieren. Dazu kann eines der stereoskopischen Teilbilder verwendet werden. Es ist aber bevorzugt, wenn die 2D-Bilddaten durch Überlagerung der beiden stereoskopischen Teilbilder miteinander erzeugt werden, um so evtl. Abschattungseffekte o.Ä. zu reduzieren. In dem die Projektion der 2D-Bilddaten von dem zuvor ermittelten Projektionspunkt aus erfolgt, wird eine gute Übereinstimmung der Projektion der 2D-Bilddaten auf das 3D-Modell mit den tatsächlichen Gegebenheiten des Bauteils erreicht.

Aufgrund der erfindungsgemäß erreichten Genauigkeit für die Abweichungen der 3D-Triangulationsdaten gegenüber dem 3D-CAD-Referenzmodell sowie für die Projektion der 2D-Bilddaten auf das Referenzmodell, ist abschließend eine automatisierte Ermittlung von Schäden an dem aufgenommenen Bauteil möglich. Dabei können die auf das 3D-CAD-Referenzmodell projizierten 2D-Bilddaten einer Bildanalyse unterzogen werden, mit der sich kleinere Schäden bspw. aufgrund von Veränderungen der Bilddaten gegenüber eines zuvor mit dem erfindungsgemäßen Verfahren dokumentierten Bauteilzustand oder durch Feststellung von Schattenwurf bspw. in Fällen von Rissen ermitteln lassen. Abweichungen der registrierten 3D-Triangulationsdaten vom ursprünglichen 3D-CAD-Referenzmodell oder einem zuvor mit dem erfindungsgemäßen Verfahren dokumentierten Bauteilzustand können ebenfalls auf einen Schaden am Bauteil hinweisen. Da diese Untersuchungen anhand des durch die 2D-Bilddaten texturierten 3D-CAD-Referenzmodells erfolgen, ist eine genaue Lokalisierung eventueller Beschädigungen möglich.

In vielen Fällen kann ein Bauteil nicht durch eine einzelne Aufnahme mit dem Stereoboroskop erfasst werden. Es ist daher bevorzugt, wenn eine Boroskopführungsvorrichtung vorgesehen ist, mit der sich das Stereoborokop und insbesondere dessen Bilderfassungseinheiten kontrolliert bewegen lassen. Weiterhin ist bevorzugt, wenn diese Boroskopführungsvorrichtung derart gesteuert wird, dass sämtliche vorgegebene Bereiche des Bauteils sequentiell vom Stereoboroskop erfasst werden, wobei die jeweils über stereoskopisches Teilbilderpaar erzeugten 3D-Triangulationsdaten und/oder 2D-Bilddaten mit Hilfe des Referenzmodells vereint werden. Über das Referenzmodell lassen sich - wie beschrieben - die Projektionspunkte zur Registierung der 3D-Triangulationsdaten und/oder der Projektion der 2D-Bilddaten genau ermitteln, sodass bei teilweiser Überlappung von 3D-Triangulationsdaten und/oder 2D-Bilddaten zweier Aufnahmen bekannte Verfahren, wie bspw. Stiching-Verfahren, angewendet werden können, um die Daten verschiedener Aufnahmen mit hoher Genauigkeit zu einem einzigen texturierten 3D-CAD-Referenzmodell zusammenfügen zu können.

Das erfindungsgemäße Verfahren ist besonders für die Boroskopinspektion von Schaufeln einer Gasturbine, insbesondere eines Flugzeugtriebwerks, geeignet. Entsprechende Schaufeln sind dabei bekanntermaßen zu ringförmigen Turbinen- oder Kompressorstufen zusammengefasst.

Aufgrund der üblichen Gleichförmigkeit der Schaufeln einer Turbinen- oder Kompressorstufe lässt sich im Regelfall allein durch die Aufnahme des Stereoboroskops nicht feststellen, welche Schaufel(n) einer Turbinen- oder Kompressorstufe sich tatsächlich im Aufnahmebereich des Stereoboroskops befinden, weshalb die Registrierung der 3D-Triangulationsdaten sowie die anschließende Projektion der 2D-Bilddaten auf das 3D-CAD-Referenzmodells regelmäßig nicht eindeutig möglich ist. Um dem zu entgegnen, ist bevorzugt, wenn bei dem Registrieren der 3D-Triangulationdaten auf das Referenzmodell die tatsächliche Rotationswinkellage der aufzunehmenden Schaufel(n) gegenüber der Rotationsachse der jeweiligen Stufe berücksichtigt wird. In anderen Worten erfolgt die Bestimmung des Projektionspunktes unter Bezugnahme auf die tatsächliche Winkellage der jeweils aufgenommenen Kompressor- oder Turbinenstufe, sodass die letztendliche Registrierung der 3D-Triangulationdaten sowie die Projektion der 2D-Bilddaten auf die tatsächlich aufgenommenen Triebwerksschaufel(n) des 3D-CAD-Referenzmodells der Turbinen- oder Kompressorstufe erfolgt.

Bei der Boroskopinspektion von Triebwerksschaufeln einer Turbinen- oder Kompressorstufe ist bevorzugt, wenn die Rotationswinkellage der aufzunehmenden Turbinen- oder Kompressorschaufeln derart gesteuert wird, dass sämtliche Turbinen- oder Kompressorschaufeln einer Turbinen- oder Kompressorstufe erfasst werden. Dadurch wird eine automatisierte Erfassung und Schadensanalyse sämtlicher Schaufeln einer Turbinen- oder Kompressorstufe möglich.

Zur Erläuterung der erfindungsgemäßen Vorrichtung wird auf die vorstehenden Ausführungen verwiesen.

Die Erfindung wird nun anhand einer vorteilhaften Ausführungsform unter Bezugnahme auf die beigefügten Zeichnungen beispielhaft beschrieben. Es zeigen:
- Figur 1:: ein Ausführungsbeispiel einer erfindungsgemäßen Vorrichtung zur Boroskopinspektion bei der Verwendung an einem Flugzeugtriebwerk;
- Figur 2:: eine Detaildarstellung zur Vorrichtung aus Figur 1;
- Figur 3a-c:: schematische Darstellungen erfasster und verarbeiteter Bild- und 3D-Triangulationsdaten;
- Figur 4:: schematische Darstellung eines 3D-CAD-Referenzmodells der Turbinenschaufeln aus Figur 1;
- Figur 5:: schematische Darstellung eines erfindungsgemäßen Verfahrens.

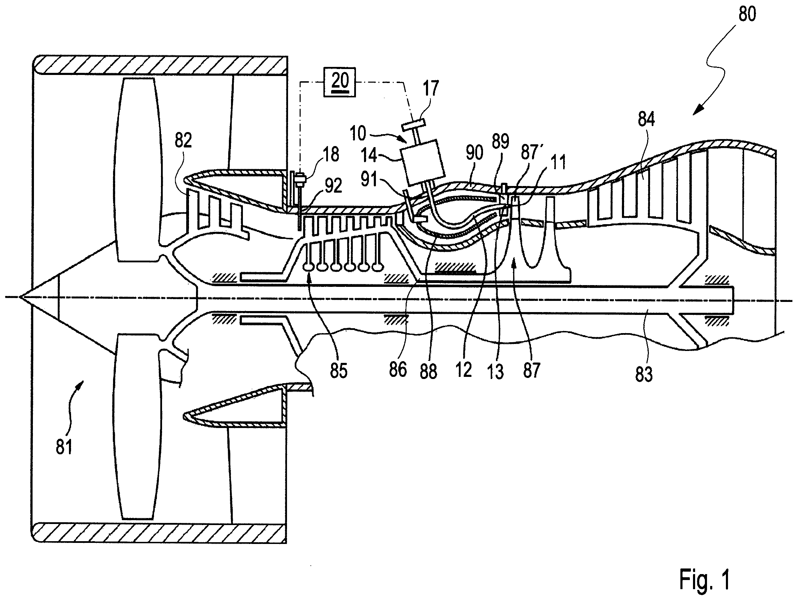

In Figur 1 ist ein Ausführungsbeispiel einer erfindungsgemäßen Vorrichtung 1 während der Verwendung zur Boroskopinspektion eines Triebwerks 80.

Bei dem im Schnitt dargestellten Triebwerks 80 handelt es sich um Zweiwellen-Triebwerk, bei dem der Fan 81 sowie der Niederdruckkompressor 82 über eine erste Welle 83 mit der Niederdruckturbine 84 drehverbunden ist, während der Hochdruckkompressor 85 über eine zweite Welle 86 mit der Hochdruckturbine 87 drehverbunden ist. Zwischen Hochdruckkompressor 85 und Hochdruckturbine 87 ist die Brennkammer 88 angeordnet.

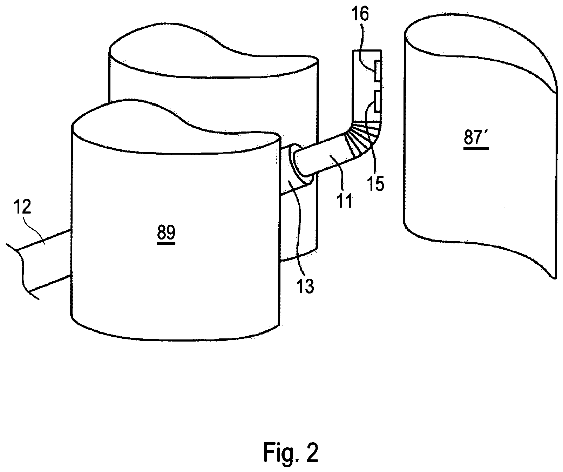

Zur Inspektion der Turbinenschaufeln 87' der ersten Stufe der Hochdruckturbine 87 ist durch eine erste Öffnung 91 in der Bewandung 90 des Triebwerks 80 ein Stereoboroskop 10 eingeführt, dessen freies Ende in Figur 2 im Detail dargestellt ist.

Das Stereoboroskop 10 ist als flexibles Boroskop ausgestaltet, bei dem der eigentliche Schaft 11 biegsam ist und durch ein gebogenes Führungsrohr 12 durch die Brennkammer 88 des Triebwerks 80 und zwischen den Leitschaufeln 89 der Hochdruckturbine 87 hindurch geschoben ist. Die Position des Stereoboroskops 10 wird dabei maßgeblich durch das freie Ende 13 des Führungsrohrs 12 bestimmt, welches sich durch die an der Außenseite der Bewandung 90 des Triebwerks 80 befestigte Boroskopführungsvorrichtung 14 steuern lässt. Gleichzeit liefert die Boroskopführungsvorrichtung 14 Informationen über die auf Basis der bei der Boroskopführungsvorrichtung 14 ablesbaren Daten ermittelbare Position des Stereoboroskops 10 gegenüber den Turbinenschaufeln 87'.

Am freien Ende des Schaftes 11 des Stereoboroskops 10 sind zwei voneinander beabstandete Bilderfassungseinheiten 15, 16 vorgesehen, die derart auf denselben Aufnahmebereich gerichtet sind, dass sie stereoskopische Teilbilder aufnehmen. Bei den Bilderfassungseinheiten 15, 16 handelt es sich um CMOS- oder CCD-Sensoren mit Global oder Rolling Shutter.

Das Stereoboroskops 10 weist eine Schnittstelle 17 auf, über die die Bilddaten der beiden Bilderfassungseinheiten 15, 16 aber auch die Informationen über die ermittelbare Position des Stereoboroskops 10 an eine übergeordnete Rechnereinheit 20 übermittelt werden können. Über diese Schnittstelle 17 kann das Stereoboroskop 10 auch Steuerungsbefehle von der Rechnereinheit 20 erhalten, um bei Bedarf die Position des Stereoboroskops 10 mit Hilfe der Boroskopführungsvorrichtung 14 zu verändern.

Darüber hinaus ist mit der Rechnereinheit 20 noch ein weiteres Boroskop 18 verbunden, welches durch eine zweite Öffnung 92 in der Bewandung 90 des Triebwerks 80 eingeführt ist und über Welches die Schaufeln des Hochdruckkompressor 85 beobachtet werden können. Das Boroskop 18 dient im vorliegenden Fall der Feststellung der Rotationswinkellage der Schaufeln des Hochdruckkompressors 85, woraus sich aufgrund der festen Verbindung des Hochdruckkompressors 85 sowie der Hochdruckturbine 87 mit der Welle 86 auch die Rotationswinkellage der Schaufeln 87' der Hochdruckturbine 87 ermitteln lassen. Die die Schaufeln 87` der Hochdruckturbine 87 aufgrund der dort herrschenden Belastung durch die Heißgase aus der Brennkammer 88 regelmäßig kein Individualisierungsmerkmal, welches von dem Stereoboroskop 10 erfasst werden könnte, aufweisen, kann über den Hochdruckkompressor 85, bei dem Entsprechendes eher möglich ist, sowie durch genaue Kenntnis der Lage der beiden Öffnungen 91, 92 in der Bewandung und der über die Boroskopführungsvorrichtung 14 ermittelbare Position dennoch festgestellt werden, welche der Turbinenschaufeln 87' der ersten Stufe der Hochdruckturbine 87 sich im Aufnahmebereich des Stereoboroskops 10 befindet.

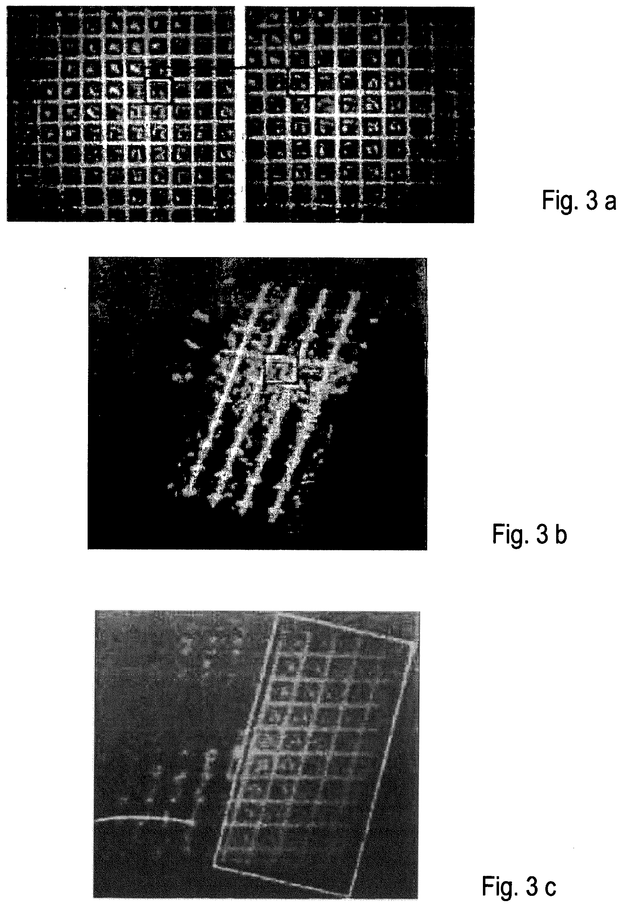

In Figur 3a ist sind exemplarisch zwei von den Bilderfassungseinheiten 15, 16 des Stereoboroskops 10 zeitgleich aufgenommenen stereoskopischen Teilbilder dargestellt. Durch unter dem Namen Stereovision bekannte Verfahren lassen sich die beiden stereoskopischen Teilbilder - ggf. nachdem sie rektifiziert wurden, um evtl. Winkelfehler o.ä. zu korrigieren - durch die Rechnereinheiten 20 zu 3D-Triangulationsdaten zusammenfassen, wie sie in Figur 3b angedeutet sind.

Mit Hilfe dieser 3D-Triangulationsdaten, die u.a. über die relative Position der Bilderfassungseinheiten 15, 16 gegenüber dem aufgenommenen Objekt Auskunft geben können, wird anschließend aus den 3D-Triangulationsdaten ein Projektionspunkt 31 gegenüber einem 3D-CAD-Referenzmodell 30 der aufzunehmenden Bauteile - hier der Turbinenschaufeln 87' der ersten Stufe der Hochdruckturbine 78 - ermittelt.

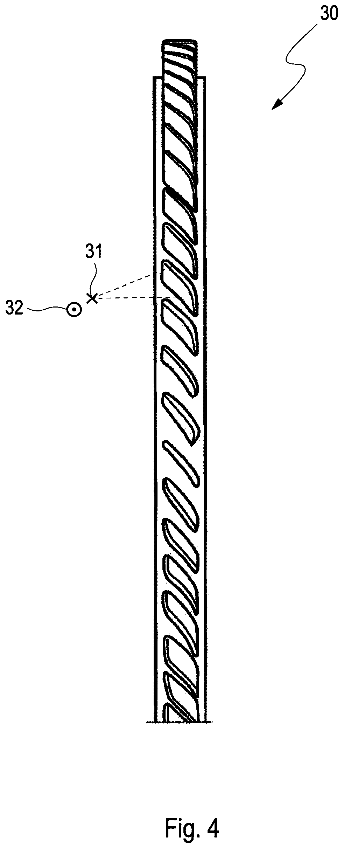

Ein entsprechendes 3D-CAD-Referenzmodell 30 ist schematisch in Figur 4 gezeigt. Das 3D-CAD-Referenzmodell 30 umfasst dabei sämtliche Turbinenschaufeln 87' der ersten Stufe der Hochdruckturbine 87 und basiert auf den Konstruktionszeichnungen des Triebwerks 80.

Aufgrund der Gleichförmigkeit der einzelnen Turbinenschaufeln 87' lässt sich allein auf Basis der 3D-Triangulationsdaten keine eindeutige Position des Projektionspunktes 31 bestimmen.

Durch die über die Boroskopführungsvorrichtung 14 ermittelbare Position des Stereoboroskops 10 im Innern des Triebwerks 80 lässt sich jedoch zusammen mit der über das Boroskop 92 ermittelbaren Rotationswinkellage der Hochdruckturbine 87 und damit der Turbinenschaufeln 87' eine zumindest ungefähre Position 32 der Bilderfassungseinheiten 15, 16 gegenüber den Triebwerksschaufeln 87` und damit des Projektionspunktes 31 gegenüber dem 3D-CAD-Referenzmodell 30 ermitteln. Diese ungefähre Position 32 wird als Ausgangspunkt für die Ermittlung der tatsächlichen Position des Projektionspunktes 31 herangezogen, wobei dann in der Regel davon ausgegangen werden kann, dass der Projektionspunkt 31 in der Nähe der ungefähren Position 32 liegt.

Die 3D-Triangulationsdaten werden ausgehend von dem so ermittelten Projektionspunkt 31 dazu genutzt, das 3D-CAD-Referenzmodell 30 an die tatsächlichen Gegebenheiten anzupassen. In anderen Worten wird das 3D-CAD-Referenzmodell 30 also derart verändert, dass es mit den 3D-Triangulationsdaten möglichst übereinstimmt.

Anschließend werden dann durch Überlagerung aus den stereoskopischen Teilbildern gewonnen 2D-Bilddaten ausgehend von dem zuvor ermittelten Projektionspunkt 31 auf das 3D-CAD-Referenzmodell 30 projiziert, wodurch dieses texturiert wird. Das Ergebnis ist in Figur 3c gezeigt.

Insbesondere, wenn nacheinander so viele Aufnahmen der Turbinenschaufeln 87` der ersten Stufe der Hochdruckturbine erstellt und wie beschrieben auf das 3D-CAD-Referenzmodell 30 übertragen wurden, dass ein vollständig texturiertes Modell der gesamten fraglichen Turbinenstufe vorliegt, kann anschließend durch Bildanalyse sowie Abgleich der erfassten tatsächlichen Struktur mit dem originären 3D-CAD-Referenzmodell 30 eine automatisierte Schadensanalyse durchgeführt werden. So lassen sich aufgrund von Verfärbungen in der Textur des Modells kleine Beschädigungen und insbesondere Risse in einzelnen Turbinenschaufeln 87` feststellen, während Abweichungen vom originären 3D-CAD-Referenzmodell 30 auf Verformungen einzelner Turbinenschaufeln 87` hinweisen, die ggf. näher zu begutachten sind. Durch die beschriebene jeweilige Registrierung der 3D-Triangulationsdaten sowie der jeweilige Projektion der 2D-Bilddaten auf diejenige Turbinenschaufel des 3D-CAD-Referenzmodells 30, die sich tatsächlich im Aufnahmebereich des Stereoskops 10 befindet, lässt sich die ggf. beschädigte Turbinenschaufeln 87` anhand des 3D-CAD-Referenzmodells 30 eindeutig bestimmen.

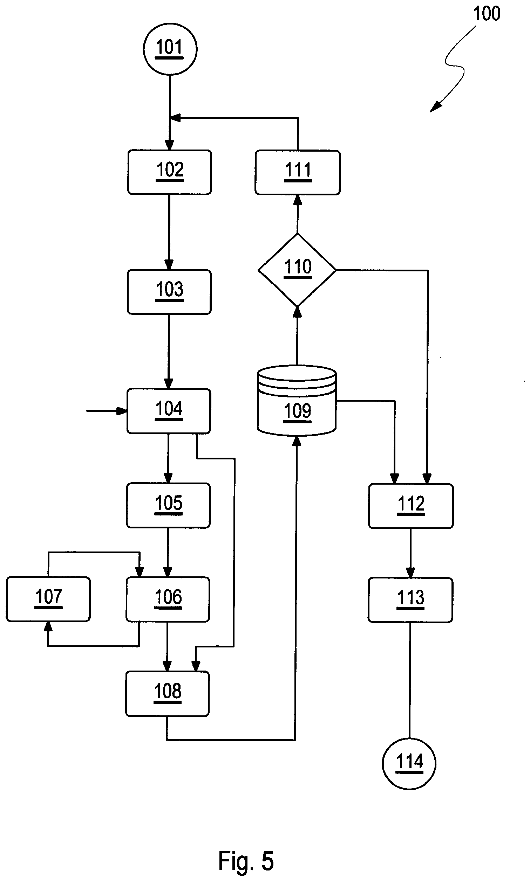

In Figur 5 ist ein Verfahrensablauf 100 dargestellt, wie die Turbinenschaufeln 87' der ersten Stufe der Hochdruckturbine 87 eines Flugzeugtriebwerks 80, wie es beispielhaft Figur 1 dargestellt ist, vollständig automatisiert erfasst und auf Schäden untersucht werden können.

Zum Start 101 des Verfahrens 100 wird davon ausgegangen, dass ein über eine Boroskopführungsvorrichtung 14 hinsichtlich seiner Position steuerbares Stereoboroskop 10 in das Triebwerk 80 eingeführt ist und auf eine der aufzunehmenden Turbinenschaufeln 87` gerichtet ist. Außerdem wird davon ausgegangen, dass neben der über die Boroskopführungsvorrichtung 14 ermittelbaren Position des Stereoboroskops 10 auch die Rotationswinkelposition der Turbinenschaufeln 87' der ersten Stufe der Hochdruckturbine 87 - bspw. unter Zuhilfenahme des zweiten Boroskops 18 - bekannt ist.

In Schritt 102 werden die stereoskopischen Teilbilder durch das Stereoboroskop 10 erzeugt. Anschließend werden die erfassten Bilddaten an die Rechnereinheit 20 übermittelt (Schritt 103). In der Rechnereinheit 20 werden die stereoskopischen Teilbilder mit Hilfe von Kalibrierungsdaten rektifiziert (Schritt 104).

Anschließend werden aus den stereoskopischen Teilbildern 3D-Triangulationsdaten gewonnen (Schritt 105), die auf ein 3D-CAD-Referenzmodell 30 registriert werden (Schritt 106). Dazu wird - wie oben in Zusammenhang mit Figur 4 erläutert - auf Basis der 3D-Triangulationsdaten ein Projektionspunkt 31 ermittelt (Schritt 107), wobei diese Ermittlung, wie in Figur 4 angedeutet, iterativ erfolgen kann. Nach erfolgter Registrierung der 3D-Triangulationsdaten und somit der Ermittlung des Projektionspunktes 31 werden in Schritt 108 die 2D-Bilddaten der in Schritt 102 erfassten stereoskopischen Teilbilder auf das 3D-CAD-Referenzmodell 30 projiziert. Das so um eine Textur ergänzte 3D-CAD-Referenzmodell 30 wird im Speicher abgelegt (Schritt 109).

Anschließend wird in Schritt 110 überprüft, ob sämtliche gewünschten Bereiche der Turbinenschaufeln 87' der ersten Stufe der Hochdruckturbine 87 erfasst wurden, wobei auch eine vollständige Aufnahme aller Turbinenschaufeln 87' gewünscht sein kann. Dazu kann bspw. anhand des 3D-CAD-Referenzmodell 30 überprüft werden, ob die fraglichen Bereiche mit 2D-Bilddaten texturiert sind bzw. ob in den fraglichen Bereichen 3D-Triangulationsdaten registriert sind.

Falls nicht, wird die Position des Stereoboroskops 10 über die Boroskopführungsvorrichtung 14 und/oder die Rotationswinkelposition der Turbinenschaufeln 87` verändert (Schritt 111) und die Schritte 102 bis 110 werden solange wiederholt, bis die gewünschten Bereiche vollständig erfasst sind.

Wird in Schritt 110 festgestellt, dass sämtliche gewünschten Bereiche erfasst sind, werden in Schritten 112 und 113 auf Basis des in Schritt 109 im Speicher abgelegten 3D-CAD-Referenzmodell eine Schadensanalyse durchgeführt. Dazu werden in Schritt 112 die zur Textur des 3D-CAD-Referenzmodell verarbeiteten 2D-Bilddaten sowie - in Schritt 113 - die Abweichungen der 3D-Triangulationsdaten vom originären 3D-CAD-Referenzmodell analysiert, um so evtl. Beschädigungen zu ermitteln.

Das Verfahren endet in Schritt 114 entweder mit dem Hinweis auf evtl. Schäden oder mit der Mitteilung, dass keine Beschädigungen gefunden wurden.

## Patentansprüche

1. Verfahren zur Boroskopinspektion eines Bauteils, bei dem ein Stereoboroskop (10) zur Aufnahme des Bauteils verwendet wird, **gekennzeichnet durch** die Schritte:
- Erzeugen zweier stereoskopischer Teilbilder durch das Stereoboroskop (10) (Schritt 102);
- Berechnung von 3D-Triangulationsdaten aus den stereoskopischen Teilbildern (Schritt 105);
- Registrieren der 3D-Triangulationdaten auf ein 3D-CAD-Referenzmodell (30) des vom Stereoboroskop (10) erfassten Bauteils unter Ermittlung eines Projektionspunktes (31) (Schritte 106 und 107);
- Projektion von aus den stereoskopischen Teilbildern ermittelten 2D-Bilddaten auf das 3D-CAD-Referenzmodell (30) vom ermittelten Projektionspunkt (Schritt 108); und
- Ermitteln von Schäden durch Bildanalyse der projizierten 2D-Bilddaten und durch Feststellung von Abweichungen der registrierten 3D-Triagulationsdaten gegenüber dem 3D-CAD-Referenzmodell (30) (Schritte 112 und 113).

2. Verfahren nach Anspruch 1,
**dadurch gekennzeichnet, dass**
vor Berechnung der 3D-Triangulationsdaten die stereoskopischen Teilbilder anhand einer vorgegebenen Kalibrierung rektifiziert werden (Schritt 104).

3. Verfahren nach einem der vorhergehenden Ansprüche,
**dadurch gekennzeichnet, dass**
das 3D-CAD-Referenzmodell (30) vor Projektion der 2D-Bilddaten darauf durch die 3D-Triangulationsdaten angepasst wird.

4. Verfahren nach einem der vorhergehenden Ansprüche,
**dadurch gekennzeichnet, dass**
die 2D-Bilddaten durch Überlagerung der stereoskopischen Teilbilder erzeugt werden.

5. Verfahren nach einem der vorhergehenden Ansprüche,
**dadurch gekennzeichnet, dass**
die Ermittlung des Projektionspunktes (31) beginnend mit einer durch eine Boroskopführungsvorrichtung (14) ermittelbare Position (32) des Stereoboroskop (10) erfolgt.

6. Verfahren nach einem der vorhergehenden Ansprüche,
**dadurch gekennzeichnet, dass**
eine oder die Boroskopführungsvorrichtung (14) derart gesteuert wird, dass sämtliche vorgegebene Bereiche des Bauteils sequentiell vom Stereoboroskop (10) erfasst werden, wobei die jeweils über stereoskopisches Teilbilderpaar erzeugten 3D-Triangulationsdaten und/oder 2D-Bilddaten mit Hilfe des 3D-CAD-Referenzmodells (30) vereint werden.

7. Verfahren nach einem der vorhergehenden Ansprüche,
**dadurch gekennzeichnet, dass**
es sich bei dem aufzunehmenden Bauteil um Schaufeln (87') einer Gasturbine, vorzugsweise eines Flugzeugtriebwerks (80) handelt, wobei bei der Registrieren der 3D-Triangulationdaten auf das 3D-CAD-Referenzmodell (30) die Rotationswinkellage der aufzunehmenden Schaufeln (87') berücksichtigt werden.

8. Verfahren nach Anspruch 7,
**dadurch gekennzeichnet, dass**
die Rotationswinkellage der aufzunehmenden Schaufeln (87`) derart gesteuert wird, dass sämtliche Schaufeln (87') einer Turbinen- oder Kompressorstufe erfasst werden.

9. Vorrichtung zur Boroskopinspektion eines Bauteils umfassend ein Stereoboroskop (10) und eine damit verbundene Rechnereinheit (20) mit Zugriff auf einen Speicher umfassend ein 3D-CAD-Referenzmodell (30), wobei die Vorrichtung zur Durchführung eines Verfahrens gemäß einem der Ansprüche 1 bis 4 ausgebildet ist.

10. Vorrichtung nach Anspruch 9,
**dadurch gekennzeichnet, dass**
eine mit der Rechnereinheit (20) verbundene Boroskopführungsvorrichtung (14) zur Führung des Stereoboroskops (10) vorgesehen ist, wobei die Vorrichtung zur Durchführung eines Verfahrens gemäß einem der Ansprüche 5 oder 6 weitergebildet ist.

11. Vorrichtung nach Anspruch 9 oder 10,
**dadurch gekennzeichnet, dass**
die Vorrichtung zur Ermittlung und Berücksichtigung der Rotationswinkellage von Schaufeln (87') einer Gasturbine, vorzugsweise eines Flugzeugtriebwerks (80) als aufzunehmendes Bauteil ausgebildet und zur Durchführung eines Verfahrens gemäß einem der Ansprüche 7 oder 8 weitergebildet ist.

## Claims

1. Method for borescope inspection of a component, wherein a stereo borescope (10) is used for recording the component, **characterized by** the following steps:
- generating two stereoscopic partial images by means of the stereo borescope (10) (step 102);
- calculating 3D triangulation data from the stereoscopic partial images (step 105);
- registering the 3D triangulation data to a 3D CAD reference model (30) of the component captured by the stereo borescope (10), while determining a projection point (31) (steps 106 and 107);
- projecting 2D image data determined from the stereoscopic partial images onto the 3D CAD reference model (30) from the determined projection point (step 108); and
- determining damage by image analysis of the projected 2D image data and by ascertaining deviations of the registered 3D triangulation data vis-à-vis the 3D CAD reference model (30) (steps 112 and 113).

2. Method according to Claim 1,
**characterized in that**
before calculating the 3D triangulation data, the stereoscopic partial images are rectified on the basis of a predefined calibration (step 104).

3. Method according to either of the preceding claims,
**characterized in that**
the 3D CAD reference model (30) is adapted by the 3D triangulation data before the 2D image data are projected onto said 3D CAD reference model.

4. Method according to any of the preceding claims,
**characterized in that**
the 2D image data are generated by superimposing the stereoscopic partial images.

5. Method according to any of the preceding claims,
**characterized in that**
the projection point (31) is determined beginning with a position (32) of the stereo borescope (10) that is determinable by a borescope guide device (14).

6. Method according to any of the preceding claims,
**characterized in that**
a or the borescope guide device (14) is controlled in such a way that all predefined regions of the component are captured sequentially by the stereo borescope (10), wherein the 3D triangulation data and/or 2D image data generated in each case by way of a stereoscopic partial image pair are combined with the aid of the 3D CAD reference model (30).

7. Method according to any of the preceding claims,
**characterized in that**
the component to be recorded is blades (87') of a gas turbine, preferably of an aircraft engine (80), wherein the rotation angle position of the blades (87') to be recorded are taken into account when registering the 3D triangulation data to the 3D CAD reference model (30).

8. Method according to Claim 7,
**characterized in that**
the rotation angle position of the blades (87') to be recorded is controlled in such a way that all blades (87') of a turbine or compressor stage are captured.

9. Device for borescope inspection of a component comprising a stereo borescope (10) and, connected thereto, a computer unit (20) having access to a memory comprising a 3D CAD reference model (30), wherein the device is configured for carrying out a method according to any of Claims 1 to 4.

10. Device according to Claim 9,
**characterized in that**
provision is made of a borescope guide device (14) for guiding the stereo borescope (10), said borescope guide device being connected to the computer unit (20), wherein the device is developed for carrying out a method according to either of Claims 5 and 6.

11. Device according to Claim 9 or 10,
**characterized in that**
the device is configured for determining and taking account of the rotation angle position of blades (87') of a gas turbine, preferably of an aircraft engine (80), as component to be recorded and is developed for carrying out a method according to either of Claims 7 and 8.

## Revendications

1. Procédé d'inspection boroscopique d'un composant, procédé dans lequel un boroscope stéréoscopique (10) est utilisé pour capturer le composant, **caractérisé par** les étapes suivantes :
- générer deux images partielles stéréoscopiques par le biais du boroscope stéréoscopique (10) (étape 102) ;
- calculer des données de triangulation 3D à partir des images partielles stéréoscopiques (étape 105) ;
- enregistrer des données de triangulation 3D sur un modèle de référence CAO 3D (30) du composant détecté par le boroscope stéréoscopique (10) lors de la détermination d'un point de projection (31) (étapes 106 et 107) ;
- projeter des données d'image 2D, déterminées à partir des images partielles stéréoscopiques, sur le modèle de référence CAO 3D (30) à partir du point de projection déterminé (étape 108) ; et
- déterminer des dommages par analyse d'image des données d'image 2D projetées et par détermination d'écarts des données de triagulation 3D enregistrées par rapport au modèle de référence CAO 3D (30) (étapes 112 et 113).

2. Procédé selon la revendication 1,
**caractérisé en ce que**
avant le calcul des données de triangulation 3D, les images partielles stéréoscopiques sont redressées sur la base d'un étalonnage spécifié (étape 104).

3. Procédé selon l'une des revendications précédentes,
**caractérisé en ce que**
avant la projection des données d'image 2D, le modèle de référence CAO 3D (30) est adapté par les données de triangulation 3D.

4. Procédé selon l'une des revendications précédentes,
**caractérisé en ce que**
les données d'image 2D sont générées par superposition des images partielles stéréoscopiques.

5. Procédé selon l'une des revendications précédentes,
**caractérisé en ce que**
la détermination du point de projection (31) est effectuée à partir d'une position (32) du boroscope stéréoscopique (10) qui peut être déterminée par un dispositif de guidage de boroscope (14).

6. Procédé selon l'une des revendications précédentes,
**caractérisé en ce que**
un ou le dispositif de guidage de boroscope (14) est commandé de manière à ce que toutes les zones spécifiées du composant soient détectées séquentiellement par le boroscope stéréoscopique (10), les données de triangulation 3D et/ou les données d'image 2D, générées à chaque fois par le biais de la paire d'images partielles stéréoscopiques, étant réunis à l'aide du modèle de référence CAO 3D (30).

7. Procédé selon l'une des revendications précédentes,
**caractérisé en ce que**
le composant à capturer est des aubes (87') d'une turbine à gaz, de préférence 'un moteur d'avion (80), la position angulaire en rotation des aubes (87') à capturer étant pris en compte lors de l'enregistrement des données de triangulation 3D sur le modèle de référence CAO 3D (30).

8. Procédé selon la revendication 7,
**caractérisé en ce que**
la position angulaire en rotation des aubes (87') à capturer est commandée de manière à ce que toutes les aubes (87') d'un étage de turbine ou de compresseur soient acquises.

9. Dispositif d'inspection boroscopique d'un composant, ledit dispositif comprenant un boroscope stéréoscopique (10) et une unité informatique (20) reliée à celui-ci avec accès à une mémoire comprenant un modèle de référence CAO 3D (30), le dispositif étant conçu pour mettre en oeuvre un procédé selon l'une des revendications 1 à 4.

10. Dispositif selon la revendication 9,
**caractérisé en ce que**
un dispositif de guidage de boroscope (14), relié à l'unité informatique (20), est prévu pour guider le boroscope stéréoscopique (10), le dispositif étant en outre développé pour exécuter un procédé selon l'une des revendications 5 ou 6.

11. Dispositif selon la revendication 9 ou 10,
**caractérisé en ce que**
le dispositif est conçu pour déterminer et prendre en compte la position angulaire en rotation d'aubes (87') d'une turbine à gaz, de préférence d'un moteur d'avion (80), comme composant à capturer et est développé pour mettre en oeuvre un procédé selon l'une des revendications 7 ou 8.
